# EUROPEAN PATENT APPLICATION

(11) **EP 1 605 693 A2**
(43) Date of publication of application: **14.12.2005**
(21) Application number: 05252792.6
(22) Date of filing: 06.05.2005
(51) Int. Cl.: H04N 5/782

(54) **Video recording apparatus for reservation recording by just recording method and method thereof**

(30) Priority: 09.06.2004 KR 2004042183
(71) Applicant: SAMSUNG ELECTRONICS CO., LTD., Suwon-si, Gyeonggi-do 442-742 (KR)
(72) Inventor: Na, Jae-hoon, c/o 704-1601, Salgugol 7danji Apt., Suwon-si, Gyeonggi-do (KR)
(74) Representative: Waddington, Richard

(57) **Abstract**

A video recording apparatus and a reservation recording method of the same perform reservation recording on a plurality of programs by using an unbiased/just recording method. The video recording apparatus to record broadcast programs on a recording medium includes a detecting unit (180) to detect a remaining time capable of being used to record on the recording medium; and a control unit (140) to calculate a total recording time of reserved broadcast programs to be recorded, comparing the total recording time with the detected remaining time, and controlling a recording speed of a predetermined recording mode to perform the recording when the total recording time is greater than the remaining time. Accordingly, the plurality of reserved programs may be recorded by the unbiased/just recording method even when the plurality of programs are reserved to be recorded in the video recording apparatus.

## Description

The present invention relates to a video recording apparatus and a reservation recording method, and in particular, to a video recording apparatus for recording reserved programs using an unbiased/just recording method, and a reservation recording method for the same.

The video recording apparatus receives video signals from video signal sources, processes the video signals, stores them in a storage device, reproduces the video signals recorded in the storage device to allow users to watch them, and outputs them to an external display, typically, a Video Cassette Recorder (VCR), a Digital Versatile Disk (DVD)-Recorder, and/or a VCR-DVD may be employed for the video recording apparatus.

Examples of the video signal source may include other media capable of transporting signals, such as a ground wave television broadcast and a satellite broadcast, a lead-in cable, a computer line, and a modem line.

The just (unbiased) recording method performs recording by varying its recording speed in consideration of a recording time for a reserved program to be recorded and a time with respect to a recordable capacity of a recording medium in a reservation-recording mode of the video recording apparatus.

Thus, when the recording time for the reserved program to be recorded is greater than the remaining time of the recording medium in the video recording apparatus, all of the reserved program cannot be recorded at a standard speed. Accordingly, the video recording apparatus should adjust the recording speed in consideration of the remaining time of the recording medium to record the entire reserved program. When the just recording is set to ON, the video recording apparatus automatically converts the recording mode to adjust the recording speed based on the remaining time of the recoding medium.

Such a conventional method, however, works only on a one program basis.

Accordingly, when the just recording is carried out so as to record a plurality of reserved programs, the video recording apparatus cannot determine whether the first one program should be recorded, or one program should be recorded and the recording medium should be exchanged with another one, or all programs should be recorded on one recording medium, which may lead the video recording apparatus not to record all of the reserved programs.

The present invention provides a video recording apparatus and a reservation recording method for the same, which records a plurality of reserved programs by allowing users to select that the video recording apparatus performs the unbiased/just recording on only one program, and the recording medium is switched to another recording medium to record the remaining programs, or that the video recording apparatus performs the unbiased/just recording on all of the reserved programs and records all programs on one recording medium when the plurality of reserved programs are set to be recorded.

According to the present invention there is provided an apparatus and method as set forth in the appended claims. Preferred features of the invention will be apparent from the dependent claims, and the description which follows.

According to an aspect of the present invention, a video recording apparatus is operable to record broadcast programs on a recording medium, wherein the recording apparatus comprises a remaining time detecting unit to detect a remaining time capable of being used to record on the recording medium; and a control unit to calculate a total recording time of reserved broadcast programs to be recorded, to compare the total recording time with the detected remaining time, and to control a recording speed of a predetermined recording mode to perform the recording when the total recording time is bigger than the remaining time.

Generally, the control units may automatically change the recording mode of the video recording apparatus to a mode having a recording speed capable of recording one program within the remaining time when the one program among the reserved broadcast programs to be recorded within the remaining time is selected when the total recording time is bigger than the remaining time.

Furthermore, typically the control units may automatically change the recording mode of the video recording apparatus to a mode having a recording speed capable of recording all of the reserved broadcast programs when the total recording time is greater than the remaining time.

According to another aspect of the present invention, a reservation recording method for a video recording apparatus comprises calculating a total recording time of reserved broadcast programs to be recorded and a remaining time of a recording medium; comparing the total recording time with the remaining time; changing to a predetermined recording speed of a recording mode when the total recording time is greater than the remaining time; and performing the recording at the changed recording speed.

In addition, generally the changing of the recording speed preferably includes selecting one program among the broadcast programs to be recorded within the remaining time; and preferably automatically changing the recording mode of the video recording apparatus to a mode having a recording speed capable of recording the one program within the remaining time.

Furthermore, typically the changing of the recording speed preferably includes calculating a shortage time by subtracting the remaining time of the recording medium from the total recording time of the broadcast programs, and preferably calculating the recording speed capable of recording all of the broadcast programs within the remaining time of the recording medium based on the shortage time and the total recording time.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a diagram illustrating a display system applied to a video recording apparatus in accordance with an embodiment of the present invention;
FIG. 2 is a block diagram of the video recording apparatus shown in FIG. 1; and
FIG. 3 is a flow chart illustrating operations of a reservation recording method for a video recording apparatus in accordance with an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

The matters defined in the description such as a detailed construction and elements are only provided to assist in a comprehensive understanding of the invention. Thus, it is apparent that the present invention may be carried out without such defined matters. Also, well-known functions or constructions are not described in detail since to do so would obscure the invention in unnecessary detail.

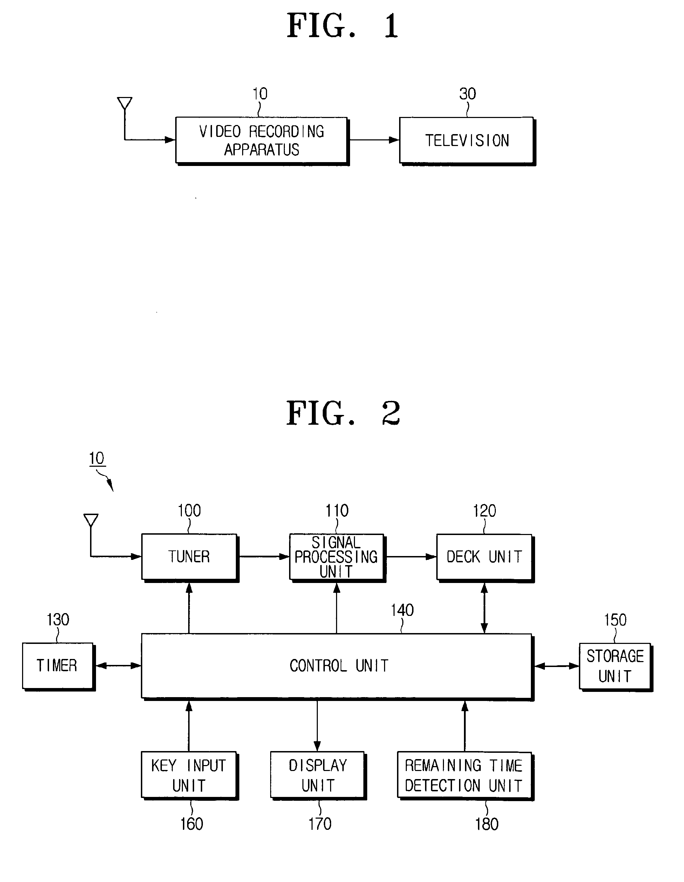

FIG. 1 is a diagram illustrating a display system applied to a video recording apparatus in accordance with one embodiment of the present invention. Referring to FIG. 1, a video recording apparatus 10 is connected to a transport cable and a television 30 as a display. The video recording apparatus 10 processes received signals and transports display information to the television 30.

FIG. 2 is a block diagram of the video recording apparatus in accordance with an embodiment of the present invention.

Referring to FIG. 2, the video recording apparatus 10 comprises a tuner 100, a signal processing unit 110, a deck unit 120, a timer 130, a control unit 140, a storage unit 150, a key input unit 160, a display unit 170, and a remaining time detection unit 180.

The tuner 100 adjusts receiving channels to allow external broadcast signals of the corresponding channels that the control unit 140 requests to be received. The signal processing unit 110 converts the received broadcast signals into signals to be recorded on a recording medium of the deck unit 120. The deck unit 120 controls operations of the deck mechanism to write, reproduce, or record the converted signals on the recording medium under control signals of the control unit 140. The timer 130 checks the current time to display it on the display unit 170.

The storage unit 150 stores various programs and data associated with performing functions of the control unit 140. In addition, a program that processes a menu list screen, including a program list in which reservation recordings are set, reservation information, and functions to record stored programs which are data supplied through the key input unit 160, is stored in the storage unit 150.

The key input unit 160 includes various keys, and selection and operation control signals of various functions of the video recording apparatus 10 are input through the key input unit 160 by a user. Specifically, the user inputs reservation information including broadcast channel numbers for reserved programs to be recorded, a recording start time and date, and a recording end time and date through the key input unit 160. The user selects a desired menu in the menu list screen displayed on the display using the key input unit 160, which outputs the selected menu to the control unit 140.

In this case, the key input unit 160 may include not only an external input device to transport wireless signals such as infrared signals, but also other input devices such as a wired keyboard.

The display unit 170 displays a current time, a state of the video recording apparatus 10, a reservation information, a remaining time of the recording medium, states of reproduction and recording in progress, and the like.

The remaining time detection unit 180 detects the remaining time capable of being used to record on the recording medium on which reservation recording is performed.

The control unit 140 controls operations of the above-mentioned devices to control general operations of the video recording apparatus 10 under the control program stored in the storage unit 150.

More particularly, the control unit 140 has the reserved information displayed on the display unit 170 and has it stored in the storage unit 150. When the setting is completed, the controls 140 calculates the total recording time of the reserved programs to be recorded, and detects the remaining time capable of being used to record on the recording medium. The control unit 140 compares the detected total recording time with the remaining time. When the total recording time is greater than the remaining time, the control unit 140 has the menu list displayed to have the unbiased/just recording selected.

When the selection signal of the menu list is input by the user through the key input unit 160, the control unit 140 processes the menu list screen to be displayed on the display and calculates the recording speed suitable for the shortage time based on the unbiased/just recording method selected by the key input unit 160.

The control unit 140 retrieves the recording mode corresponding to the calculated recording speed and converts it into a mode corresponding to a standard mode. The control unit 140 then drives the timer 130 to compare the current time with the recording start time. When it reaches the recording time, the control unit 140 reads in the broadcast channel numbers of reserved programs to be recorded from the storage unit 150 and controls the tuner 100 to receive them. The control unit 140 controls the deck unit 120 to allow the received broadcast signals to be recorded in the converted recording mode.

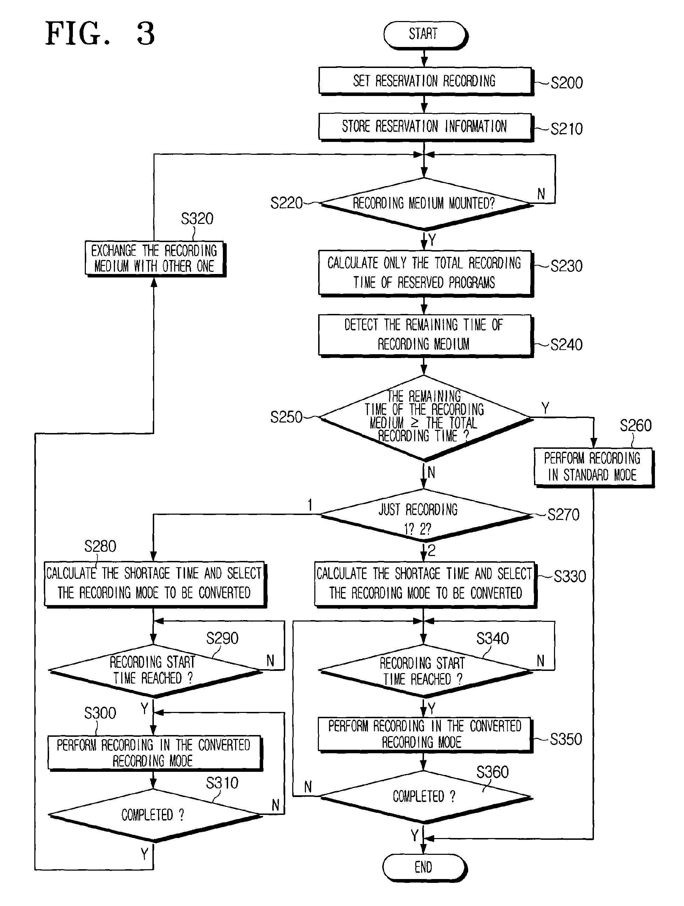

FIG. 3 is a flow chart illustrating a reservation recording method for a video recording apparatus in accordance with an embodiment of the present invention. Referring to FIG. 3, the user sets the reservation information (S200). Examples of the set reservation information include broadcast station channel numbers of programs to be recorded, a recording start time and date, a recording end time and date, and the like.

The control unit 140 allows the set reservation information to be stored in a data memory of the storage unit 150 (5210). After the information is stored, the deck unit 120 senses whether the recording medium is mounted to perform a recording operation under control of the control unit 140 (S220).

When it is determined that the recording medium is mounted in S220, the control unit 140 calculates the total recording time of reserved programs to be recorded (S230). A recording time is obtained by subtracting a recording start time and date from a recording end time and date per one program, and each of the recording times for all programs to be recorded is summed together to obtain the total recording time of all programs to be recorded.

The remaining time detection unit 180 detects the remaining time capable of being used to record on the recording medium mounted on the deck unit 120 (5240). The control unit 140 has the detected remaining time displayed on the display unit 170 or the display to allow the user to see it.

The control unit 140 compares the total recording time with the remaining time (S250). Upon comparison, when the remaining time of the recording medium is greater than the total recording time of reserved programs to be recorded, the control unit 140 may instruct all of the reserved programs to be recorded, so that the control unit 140 automatically has all the programs recorded in a standard mode when the recording start time is reached (S260).

The User sees the remaining time capable of being used to record on the recording medium displayed on the display, and selects the unbiased/just recording method in response to the remaining time when the total recording time of the set programs is greater than the remaining time of the recording medium (S270).

The User selects the unbiased/just recording method with respect to only one program when the remaining time of the recording medium is significantly smaller than the total recording time of all reserved programs. Alternatively, the user selects the unbiased/just recording method with respect to all reserved programs when the user tries to record all of the reserved programs on one recording medium, even if the remaining time of the recording medium is smaller than the total recording time of all reserved programs.

When the unbiased/just recording method is selected with respect to only one program, the control unit 140 calculates the shortage time by subtracting the remaining time of the recording medium from the recording time of the program. The control unit 140 calculates the recording speed based on the calculated shortage time and the amount of recording for the program, and selects the recording mode suitable for the calculated recording speed (5280) .

The control unit 140 allows the standard mode to be converted automatically to a selected recording mode, and has the recording medium recorded in the converted recording mode (S300) when the recording start time is reached (S290).

When the recording is completed with respect to the one program (S310), the recording medium is exchanged with another recording medium (S320), and the remaining reserved programs are recorded from the operation S220 again.

In the operation S270, when the unbiased/just recording method is selected with respect to all reserved programs, the control unit 140 calculates the shortage time by subtracting the remaining time from the total recording time. The control unit 140 calculates the recording speed based on the calculated shortage time and the amount of recording for the entire reserved program, and selects the recording mode suitable for the calculated recording speed (5330) .

The control unit 140 allows the standard mode to be converted automatically to a selected recording mode, and has the recording medium recorded in the converted recording mode (S350) when each of the recording start times for the reserved programs is reached (S340).

Under control of the control unit 140, recording is paused when the recording for one program is completed until the recording start time of the next program, and the recording is resumed in the selected recording mode when the recording start time is reached. After the recording is repeatedly performed, recording comes to an end when all programs are recorded (S360).

As mentioned above, in accordance with the present invention, the video recording apparatus may allow a plurality of reserved programs to be recorded using the unbiased/just recording method even when all of the reserved programs are set to be recorded.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video recording apparatus to record broadcast programs on a recording medium, comprising:
a remaining time detecting unit (180) to detect a remaining time capable of being used to record on the recording medium; and
a control unit (140) to calculate a total recording time of reserved broadcast programs to be recorded, to compare the total recording time with the detected remaining time, and to control a predetermined recording speed of a recording mode to perform the recording when the total recording time is greater than the remaining time.

2. The video recording apparatus as recited in claim 1, wherein the control unit (140) automatically changes the recording mode of the video recording apparatus to a mode having a recording speed capable of recording one program within the remaining time when the one program among the reserved broadcast programs to be recorded within the remaining time is selected in a case that the total recording time is greater than the remaining time.

3. The video recording apparatus as recited in claim 1, wherein the control unit (140) automatically changes the recording mode of the video recording apparatus to a mode having a recording speed capable of recording the reserved broadcast programs when the total recording time is greater than the remaining time.

4. A reservation recording method of a video recording apparatus, comprising:
calculating a total recording time of reserved broadcast programs to be recorded and a remaining time of a recording medium;
comparing the total recording time with the remaining time;
changing to a predetermined recording speed of a recording mode when the total recording time is greater than the remaining time; and
performing the recording at the changed recording speed.

5. The method as recited in claim 4, changing the recording speed including:
selecting one program among the broadcast programs to be recorded within the remaining time; and
automatically changing the recording mode of the video recording apparatus to a mode having a recording speed capable of recording the one program within the remaining time.

6. The method as recited in claim 4, changing the recording speed including:
calculating a shortage time by subtracting the remaining time of the recording medium from a total recording time of the broadcast programs; and
calculating the recording speed capable of recording the broadcast programs within a remaining time of the recording medium based on the shortage time and the total recording time.

7. A video recording apparatus to record broadcast programs on a recording medium, comprising:
a detector (180) to detect an available recording time on a recording medium; and
a controller (140) to adjust a predetermined recording speed to conform the available recording time on the recording medium to a total recording time of reserved broadcast programs to be recorded when a total recording time of the programs is greater than the available recording time.

8. The video recording apparatus as recited in claim 7, wherein the controller (140) automatically changes a recording mode of the video recording apparatus to a mode having a recording speed capable of recording a program of the reserved broadcast programs within the available recording time when the program has a total recording time that is greater than the available recording time.

9. The video recording apparatus as recited in claim 7, wherein the controller (140) automatically changes a recording mode of the video recording apparatus to a mode having a recording speed capable of recording the reserved broadcast programs when the total recording time is greater than the remaining time.

10. A reservation recording method of a video recording apparatus, comprising:
detecting an available recording time on a recording medium; and
adjusting a predetermined recording speed to conform the available recording time on the recording medium to a total recording time of reserved broadcast programs to be recorded when a total recording time of the programs is greater than the available recording time.

11. The method as recited in claim 10, wherein adjusting the predetermined recording speed includes:
selecting a program among the broadcast programs to be recorded within the available recording time; and
automatically changing the recording mode of the video recording apparatus to a mode having a recording speed capable of recording a program within the available recording time.

12. The method as recited in claim 10, wherein the adjusting the predetermined recording speed includes:
calculating a shortage time by subtracting the available recording time from a total recording time of the broadcast programs; and
calculating a recording speed capable of recording the broadcast programs within the available recording time of the recording medium based on the shortage time and the total recording time.

13. A video recording apparatus to record broadcast programs on a recording medium, comprising:
a control unit (140);
a tuner (100) to adjust receiving channels to allow external broadcast signals of corresponding channels that the control unit (140) requests to be received;
a signal processing unit (110) to convert the received broadcast signals into signals to be recorded on a recording medium;
a deck unit (120) to control operations of a deck mechanism to write, reproduce, and/or record the converted signals on the recording medium under control signals of the control unit (140);
a timer (130) to check and display a current time on a display unit (170);
a storage unit (150) to store programs and data associated with performing functions of the control unit (140), including storing a control program that processes a menu list screen, including a program list in which reservation recordings are set, reservation information, and functions to record stored programs which are data supplied through a key input unit (160);
the key input unit (160) to facilitate selection and operation of control signals of functions of the video recording by a user;
the display unit (170) to display a current time, a state of the video recording apparatus, a reservation information, a remaining time of the recording medium, and states of reproduction and recording in progress;
a remaining time detection unit (180) to detects the remaining time capable of being used to record on the recording medium on which reservation recording is performed;
wherein the control unit (140) controls operations of the video recording apparatus under the control program stored in the storage unit (150).

14. The video recording apparatus of any preceding claim, wherein the video recording apparatus is coupled to a television (30) via a transport cable.
